# EUROPÄISCHE PATENTANMELDUNG

(11) **EP 4 566 730 A1**
(43) Veröffentlichungstag der Anmeldung: **11.06.2025**
(21) Anmeldenummer: 24205245.4
(22) Anmeldetag: 08.10.2024
(51) Int. Cl.: B08B 5/04, B65G 45/10, B65G 45/22, B08B 1/32, B08B 5/02, B08B 7/04, B65G 53/46, B65G 65/48, B08B 9/00, B08B 3/02, B08B 13/00

(54) **REINIGUNGSVORRICHTUNG ZUM REINIGEN EINER ANLAGENKOMPONENTE, REINIGUNGSSYSTEM, ANORDNUNG UND FÖRDERANLAGE**

(30) Priorität: 07.12.2023 DE 102023134325
(71) Anmelder: Coperion GmbH, 70469 Stuttgart (DE)
(72) Erfinder: Schorer, Matthias, 88279 Amtzell (DE); Langenberger, Max, 88348 Kleintissen (DE); Fuest, Cornel, 88212 Ravensburg (DE); Zinser, Bruno, 88289 Waldburg (DE); Sprung, Jochen, 88214 Ravensburg (DE); Weiler, Robin, 88213 Ravensburg (DE)
(74) Vertreter: Ege Lee & Roider Patentanwälte

(57) **Zusammenfassung**

Reinigungsvorrichtung (114, 200, 300) zum Reinigen einer Anlagenkomponente (102) einer Förderanlage (104) zum Fördern von Schüttgut, umfassend: zumindest ein Reinigungswerkzeug (118, 206) zum Reinigen zumindest eines Teils der Anlagenkomponente (102) und einen Trägerabschnitt (124, 202, 302) zum Befestigen der Reinigungsvorrichtung (114, 200, 300) an der Anlagenkomponente (102), an einer Transporteinrichtung (122) und/oder an einem Drittgegenstand (104), wobei die Reinigungsvorrichtung (114, 200, 300) ausgebildet ist, einen Reinigungsvorgang zum Reinigen zumindest eines Teils der Anlagenkomponente (102) selbsttätig zu veranlassen, sowie ein Reinigungssystem (100) mit einer solchen Reinigungsvorrichtung (114, 200, 300) und einer Servicestation (116), eine Anordnung umfassend die Reinigungsvorrichtung (114, 200, 300) und die Anlagenkomponente (102), und eine Förderanlage (104).

## Beschreibung

Die Erfindung betrifft eine Reinigungsvorrichtung zum Reinigen einer Anlagenkomponente, beispielsweise einer Zellenradschleuse. Außerdem betrifft die Erfindung ein Reinigungssystem, eine Anordnung und eine Förderanlage mit einer derartigen Reinigungsvorrichtung.

Das Reinigen von Anlagenkomponenten von Schüttgut-Förderanlagen stellt in der Praxis hinsichtlich Reinigungsleistung, Reproduzierbarkeit und Aufwand eine große Herausforderung dar. Nachteilig ist insbesondere die manuelle Reinigung der Anlagenkomponenten. Nicht zuletzt besteht auch ein hohes Verletzungsrisiko für die Mitarbeiter, welche die Reinigung der Anlagekomponenten manuell durchführen müssen. Gerade bei der Verarbeitung von gesundheitsschädlichen Stoffen, beispielsweise für die Batterie- oder Pharmaproduktherstellung, aber auch bei hohen Hygieneanforderungen oder Reinheitsgraden bei der Verarbeitung von Lebensmitteln (z.B. zur Vermeidung von bestimmten Allergenen) spielt eine sichere und effiziente Reinigung eine große Rolle.

Der Erfindung liegt die Aufgabe zugrunde, eine eingangs genannte Reinigungsvorrichtung strukturell und/oder funktionell zu verbessern. Außerdem liegt der Erfindung die Aufgabe zugrunde, ein Reinigungssystem, eine Anordnung und eine Förderanlage strukturell und/oder funktionell zu verbessern.

Es ist daher eine Aufgabe der vorliegenden Erfindung, eine Reinigungsvorrichtung bereitzustellen, die neben einer umfassenden Reinigungsleistung auch eine sichere und effiziente Reinigung von Anlagenkomponenten ermöglicht.

Die Aufgabe wird gelöst mit einer Reinigungsvorrichtung mit den Merkmalen des Anspruchs 1. Außerdem wird die Aufgabe gelöst mit einem Reinigungssystem mit den Merkmalen des Anspruchs 13. Ferner wird die Aufgabe gelöst mit einer Anordnung mit den Merkmalen des Anspruchs 14 bzw. mit einer Förderanlage mit den Merkmalen des Anspruchs 1 7. Vorteilhafte Ausführungen und/oder Weiterbildungen sind Gegenstand der Unteransprüche, der Beschreibung und/oder den begleitenden Figuren.

Sowohl die in den Patentansprüchen angegebenen Merkmale, als auch die in den nachfolgenden Ausführungsbeispielen der erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Der Kern der Erfindung besteht insbesondere darin, dass die Reinigungsvorrichtung einen Reinigungsvorgang zum Reinigen der Anlagenkomponente selbsttätig veranlassen und insbesondere die Reinigung automatisch durchführen kann.

Gemäß einem Aspekt ist eine Reinigungsvorrichtung vorgesehen, die zum Reinigen einer Anlagenkomponente einer Förderanlage ausgebildet ist. Die Reinigungsvorrichtung kann auch als Reinigungssatellit bezeichnet werden und/oder als Reinigungsroboter ausgeführt sein. Die Förderanlage ist hier zum Fördern von Schüttgut ausgebildet. In einer Variante kann die Förderanlage als pneumatische Förderanlage eingerichtet sein. Bei dem Schüttgut kann es sich um Granulat, körniges Material, Partikel, Pulver oder Flocken handeln. Beispielsweise kann das Schüttgut ein Kunststoffmaterial, ein Lebensmittel, wie z.B. Milchpulver oder Milchersatzpulver, ein Tierfuttermittel, ein Pharmastoff bzw. Arzneistoff, ein Arzneimittel oder ein Batteriematerial, wie z.B. ein Beschichtungsgemisch oder ein Anoden- oder Kathodenmaterial, sein.

Zum Reinigen zumindest eines Teils der Anlagenkomponente weist die Reinigungsvorrichtung zumindest ein Reinigungswerkzeug auf. Insbesondere kann die Reinigungsvorrichtung und/oder dessen Reinigungswerkzeug zur trockenen, feuchten und/oder nassen Reinigung eingerichtet sein. Das zumindest eine Reinigungswerkzeug kann beispielsweise eine Blaseinrichtung, Sprüheinrichtung, Bürsteneinrichtung, Klingeneinrichtung und/oder Wischeinrichtung sein. Auch eine Saugeinrichtung ist als Reinigungswerkzeug einsetzbar. Alternativ kann das Reinigungswerkzeug zusätzlich eine Saugeinrichtung aufweisen. Das Reinigungswerkzeug kann beispielsweise zumindest einen Sprühkopf, zumindest eine Sprühdüse, zumindest eine Luftdüse, zumindest eine Bürste, zumindest eine Klinge / Schaber und/oder zumindest einen Wischer aufweisen. In einer Variante können diese Reinigungselemente auch rotierbar oder drehbar ausgebildet sein. Die Blaseinrichtung kann die zumindest eine Luftdüse umfassen. Beispielsweise kann die Blaseinrichtung ausgebildet sein, trockene oder feuchte Luft auszublasen. In einer Variante kann die Blaseinrichtung ausgebildet sein, temperierte, beispielsweise kalte, warme oder heiße Luft bereitzustellen und/oder auszublasen. Ferner kann die Blaseinrichtung an einer Luftquelle, beispielsweise Druckluftquelle, angeschlossen sein. Die Blaseinrichtung kann somit auch Druckluft ausblasen. Das Reinigungswerkzeug kann zum Beispiel zumindest einen Nasswischer oder zumindest eine Nassbürste aufweisen. In einer Variante kann das Reinigungswerkzeug zumindest eine Sprühkugel, Sprühlanze, Zielstrahlreiniger oder Orbitalreiniger aufweisen. Das Reinigungswerkzeug kann somit zum Einsprühen der Anlagenkomponente oder eines Teils davon, zum Beispiel mit einem Reinigungsmittel, ausgebildet sein. In einer weiteren Variante kann das Reinigungswerkzeug eine Lasereinrichtung, Ultraschalleinrichtung oder eine Strahleinrichtung, zum Beispiel eine Sandstrahleinrichtung oder Glasperlenstrahleinrichtung, umfassen. Das zumindest eine Reinigungswerkzeug ist damit in der Lage die Anlagenkomponente bzw. zumindest einen Teil der Anlagenkomponente zu reinigen und somit von Schmutz und/oder Ablagerungen zu befreien.

Ferner weist die Reinigungsvorrichtung einen Trägerabschnitt auf, der zum Befestigen der Reinigungsvorrichtung an der Anlagenkomponente, an einer Transporteinrichtung und/oder an einem Drittgegenstand ausgebildet ist. In einer Variante kann die Reinigungsvorrichtung daher als stationäre Reinigungsvorrichtung ausbildet sein, beispielsweise angebracht an der Anlagenkomponente oder an dem Drittgegenstand. Bei dem Drittgegenstand kann es sich zum Beispiel um einen Teil oder Abschnitt der Förderanlage oder um ein Teil des Gebäudes, in dem die Förderanlage installiert ist, wie eine Wand, Decke oder Boden des Gebäudes, handeln. Die Verbindung der Reinigungsvorrichtung mit der Anlagenkomponente oder dem Drittgegenstand kann als Flanschverbindung, Schraubverbindung und/oder Spannverbindung ausgebildet sein bzw. der Trägerabschnitt kann eine solche Verbindung aufweisen. Der Trägerabschnitt kann ferner ein Scharnier, einen Arm, wie Roboterarm oder Teleskoparm, einen Zylinder und/oder eine Führung, wie eine Linearführung, aufweisen. In einer Variante kann der Trägerabschnitt ein Andockelement zum Andocken an die Anlagenkomponente, an die Transporteinrichtung und/oder an den Drittgegenstand umfassen. In einer weiteren Variante kann die Reinigungsvorrichtung als mobile Reinigungsvorrichtung ausbildet sein, beispielsweise mittels der Transporteinrichtung, durch die die Reinigungsvorrichtung selbsttätig beweglich ist bzw. sich im Anwendungsraum mobil bewegen kann. In diesem Fall kann die Reinigungsvorrichtung mittels des Trägerabschnitts mit der Transporteinrichtung verbunden sein.

Die Reinigungsvorrichtung ist insbesondere ausgebildet, einen Reinigungsvorgang zum Reinigen zumindest eines Teils der Anlagenkomponente selbsttätig zu veranlassen und/oder durchzuführen. Damit ist die Reinigungsvorrichtung in der Lage, selbsttätig, insbesondere mittels des zumindest einen Reinigungswerkzeugs, die Reinigung der Anlagenkomponente durchzuführen. Unter selbsttätig kann auch verstanden werden, dass die Reinigungsvorrichtung einen Reinigungsvorgang automatisch veranlassen und/oder automatisch eine Reinigung der Anlagenkomponente bzw. zumindest eines Teils davon durchführen kann. Die Reinigungsvorrichtung kann auch eingerichtet sein, einen externen Befehl zum Start eines Reinigungsvorgangs zu empfangen und/oder ein Reinigungsvorgang automatisch zu starten, beispielsweise nach Ablauf eines definierten Zeitintervalls und/oder basierend auf einer Beurteilung, ob eine Reinigung nötig ist oder nicht. Die Reinigungsvorrichtung kann somit zur autarken Reinigung ausgebildet sein.

Der manuelle Aufwand für das Reinigen der Anlagenkomponente ist dadurch reduziert oder wird vollständig vermieden. Mit der Reinigungsvorrichtung wird eine selbsttätige und/oder automatische Reinigung der Anlagenkomponente ermöglicht. Insbesondere ermöglicht die Reinigungsvorrichtung eine automatisierte, beispielsweise autonome oder teilautonome, Reinigung der Anlagenkomponente. Die Reinigungsvorrichtung schafft daher die Voraussetzung für eine teil- oder vollautomatisierte Reinigung der Anlagenkomponente. Insbesondere können dadurch Hygieneanforderungen besser erfüllt sowie eine sichere und effiziente Reinigung, insbesondere ohne menschliche Interaktion, realisiert werden. Auch Gesundheitsrisiken beim Reinigen der Anlagenkomponente durch gesundheitsschädliche, insbesondere toxische, Stoffe beispielsweise durch Verwendung von toxischen oder reizenden Reinigungsmitteln oder im Bereich der Pharmaproduktherstellung und/oder bei der Batterieherstellung, sind reduziert oder vollständig vermieden.

In einer Variante kann die Reinigungsvorrichtung eine Kommunikationsschnittstelle aufweisen. Die Kommunikationsschnittstelle kann zum Kommunizieren mit der Anlagenkomponente und/oder mit einer Steuereinrichtung der Förderanlage eingerichtet sein. Insbesondere kann die Kommunikationsschnittstelle zum Empfangen und/oder Senden von Signalen und/oder Daten ausgebildet sein. Beispielsweise kann die Kommunikationsschnittstelle eingerichtet sein, ein Reinigungssignal zu empfangen. Zum Verarbeiten der Signale und/oder Daten kann die Reinigungsvorrichtung eine Steuereinrichtung, zum Beispiel mit einem Prozessor und/oder Speicher, aufweisen. In einer Variante kann die Reinigungsvorrichtung ausgebildet sein, den Reinigungsvorgang zu veranlassen und/oder durchzuführen, nachdem ein Reinigungssignal mittels der Kommunikationsschnittstelle empfangen wurde.

Vorzugsweise ist oder umfasst die Anlagenkomponente eine Fördereinrichtung, ein Einspeiseorgan, eine Zuführeinrichtung, eine Dosiervorrichtung, eine Schleuse, ein Drehteil, eine Weiche, einen Schieber, eine Klappe oder eine Förderschnecke. Die Schleuse kann beispielsweise eine Zellenradschleuse, Durchblasschleuse oder Austragsschleuse sein. Der Schieber kann als Absperrschieber ausgebildet sein. In einer Variante kann die Anlagenkomponente zum Einspeisen oder Ausschleusen von Schüttgut in eine bzw. aus einer Förderleitung der Förderanlage ausgebildet sein. In einer anderen Variante kann die Anlagenkomponente eine Mischvorrichtung oder eine Trennvorrichtung sein oder umfassen. Die Trennvorrichtung kann eine Vorrichtung zur Klassierung von Feststoffen nach definierten Kriterien sein, beispielsweise ein Sichter.

In einer bevorzugten Variante kann die Anlagenkomponente als Zellenradschleuse ausgebildet sein. Die Zellenradschleuse kann ein einen Innenraum aufweisendes Gehäuse und einen am Gehäuse lösbar befestigten Auszugs-Seitendeckel aufweisen. Ferner kann die Zellenradschleuse ein Zellenrad aufweisen. Das Zellenrad kann in einer Betriebsposition in dem Gehäuse um eine Längsachse drehantreibbar angeordnet und am Auszugs-Seitendeckel gehalten sein. In einer Variante weist die Zellenradschleuse eine Auszugsvorrichtung zum Verlagern des Zellenrads zwischen der Betriebsposition und einer Auszugsposition auf. Die Auszugsvorrichtung kann eine Führungseinheit zum geführten Verlagern des Zellenrads entlang einer zur Längsachse parallelen Auszugsrichtung aufweisen. Ferner kann die Auszugsvorrichtung einen gehäusefest angeordneten und mit dem Auszugs-Seitendeckel gekoppelten, insbesondere motorischen, Auszugsantrieb zum maschinell angetriebenen Verlagern des Auszugs-Seitendeckels mit dem Zellenrad umfassen. Das Zellenrad kann daher zwischen einer Betriebsposition und einer Auszugsposition mittels der Auszugsvorrichtung angetrieben und geführt verlagert werden. Damit kann ein teil- oder vollautomatisiertes Verlagern des Zellenrades in die Auszugsposition für einen Reinigungsprozess erfolgen.

Die Reinigungsvorrichtung kann eine Erkennungssensorik aufweisen. Die Erkennungssensorik kann insbesondere dazu eingerichtet sein, einen Zustand der Anlagenkomponente zu erkennen, beispielsweise ob die Anlagenkomponente in einem geöffneten oder geschlossenen Zustand ist. Zusätzlich oder alternativ kann die Erkennungssensorik dazu eingerichtet sein, zu erkennen, ob die Anlagenkomponente in einem ausgefahrenen oder eingefahrenen Zustand ist. Die Reinigungsvorrichtung kann dabei ausgebildet sein, einen Reinigungsprozess basierend auf dem erkannten Zustand zu veranlassen und/oder durchzuführen. In einer Variante kann die Erkennungssensorik eingerichtet sein, einen geöffneten oder geschlossenen Zustand der Zellenradschleuse und/oder einen ausgefahrenen oder eingefahrenen Zustand der Zellenradschleuse zu erkennen, also einen Zustand, ob das Zellenrad in der Betriebsposition oder der Auszugsposition ist. Dabei kann die Reinigungsvorrichtung ausgebildet sein, einen Reinigungsprozess zu veranlassen und/oder durchzuführen, wenn erkannt wurde, dass die Zellenradschleuse im geöffneten oder ausgefahrenen Zustand bzw. das Zellenrad in der Auszugsposition ist.

In einer Variante kann die Reinigungsvorrichtung einen Reinigungsabschnitt umfassen, der ausgebildet ist, mit der Anlagenkomponente oder einem Teil davon einen Reinigungsraum zu begrenzen. Dabei kann der Reinigungsabschnitt mit der Anlagenkomponente oder einem Teil davon korrespondierend bzw. komplementär ausgebildet sein. Beispielsweise kann der Reinigungsabschnitt als Deckelteil, wie Seitendeckel, ausgebildet sein. Der Reinigungsabschnitt kann somit als Seitendeckel einer Zellenradschleuse ausgebildet sein. Zum Beispiel kann der Reinigungsabschnitt als ein Reinigungsseitendeckel ausgeführt sein, der auf das Gehäuse der Anlagenkomponente gepresst bzw. gedrückt werden kann. An dem Reinigungsabschnitt kann das zumindest eine Reinigungswerkzeug angeordnet sein. Auch kann zumindest ein Antrieb für das Reinigungswerkzeug und/oder zumindest ein Antrieb für ein Wirkelement der Anlagenkomponente am Reinigungsabschnitt vorgesehen sein, beispielsweise auf einer dem Reinigungswerkzeug bzw. dem Wirkelement abgewandten Seite des Reinigungsabschnitts. Zusätzlich oder alternativ hierzu kann ein Antriebsmodul vorgesehen sein. Das Antriebsmodul kann zumindest einen Antrieb für das Reinigungswerkzeug und/oder zumindest einen Antrieb für das Wirkelement der Anlagenkomponente aufweisen. Der zumindest eine Antrieb kann ausgebildet sein, das Wirkelement der Anlagenkomponente anzutreiben, beispielsweise zu drehen. Ferner kann zumindest eine Leitung zum Zuführen eines Hilfsstoffs, wie Energie, Strom, Luft, Wasser, Strahlmittel, Reinigungsmittel oder dergleichen, und/oder zumindest eine Leitung zum Abführen eines Schmutzstoffs am Reinigungsabschnitt vorgesehen sein, beispielsweise auf einer dem Reinigungswerkzeug abgewandten Seite des Reinigungsabschnitts. In einer Ausführungsform kann der Reinigungsabschnitt mittels einer Bewegungseinrichtung, beispielsweise mittels zumindest einer Linearführung, einer Dreheinrichtung oder eines Arms, wie Gelenk-, Schwenk- und/oder Führungsarms, bewegbar ausgebildet sein. Das Reinigungswerkzeug kann daher mittels der Reinigungsvorrichtung bzw. dessen Bewegungseinrichtung, bei geöffneter Anlagenkomponente, in den Innenraum des Gehäuses der Anlagenkomponente eingeführt werden. Das Reinigungswerkzeug kann also in das Gehäuse der Anlagenkomponente einführbar ausgebildet sein. Dabei kann der Reinigungsabschnitt die Anlagenkomponente verschließen, insbesondere derart, dass der Innenraum des Gehäuses den Reinigungsraum bildet. Der Reinigungsabschnitt kann somit ausgebildet sein, mit der Anlagenkomponente oder einem Teil davon einen geschlossenen Reinigungsraum zu begrenzen. Dadurch kann der Innenraum des Gehäuses der Anlagenkomponente mittels der Reinigungsvorrichtung bzw. dessen Reinigungswerkzeug auf einfache Weise gereinigt werden.

Zusätzlich oder alternativ kann der Reinigungsabschnitt ausgebildet sein, die Anlagenkomponente oder ein Teil davon in einen Reinigungsraum einzuschließen. Hierbei kann der Reinigungsabschnitt als Gehäuse, beispielsweise als Zylindergehäuse oder Trommel, z.B. Waschtrommel, ausgebildet sein. Das Gehäuse kann auch als Reinigungsgehäuse bezeichnet werden. In einer Variante kann das Gehäuse kann auf einer Seite offen ausgebildet sein, beispielsweise als einseitig offener Hohlzylinder. Zusätzlich oder alternativ kann das Gehäuse auch mehrteilig, z.B. zweiteilig, ausgebildet sein. Hierbei können zwei Halbschalen das Gehäuse bilden, die relativ zueinander bewegbar ausgebildet sein können. Ferner kann das Gehäuse kann einen Innenraum, wie Reinigungsraum, begrenzen bzw. definieren. Der Reinigungsabschnitt kann somit eine Einhausung für zumindest einen Teil der Anlagenkomponenten, z.B. für das Zellenrad, bilden. In dem Gehäuse bzw. in dessen Innenraum kann das zumindest eine Reinigungswerkzeug angeordnet sein. Ferner kann zumindest ein Antrieb für das Reinigungswerkzeug und/oder zumindest ein Antrieb für ein Wirkelement der Anlagenkomponente am Gehäuse vorgesehen sein. Zusätzlich oder alternativ hierzu kann ein Antriebsmodul vorgesehen sein. Das Antriebsmodul kann zumindest einen Antrieb für das Reinigungswerkzeug und/oder zumindest einen Antrieb für das Wirkelement der Anlagenkomponente aufweisen. Der zumindest eine Antrieb kann ausgebildet sein, das Wirkelement der Anlagenkomponente anzutreiben, beispielsweise zu drehen. Ferner kann zumindest eine Leitung zum Zuführen eines Hilfsstoffs, wie Energie, Strom, Luft, Wasser, Strahlmittel, Reinigungsmittel oder dergleichen, und/oder zumindest eine Leitung zum Abführen eines Schmutzstoffs am Gehäuse vorgesehen sein. In einer Ausführungsform kann der Reinigungsabschnitt mittels einer Bewegungseinrichtung, beispielsweise mittels zumindest einer Linearführung, einer Dreheinrichtung oder eines Arms, wie Gelenk-, Schwenk- und/oder Führungsarms, bewegbar ausgebildet sein. Der Reinigungsabschnitt bzw. das Gehäuse kann daher, bei geöffneter Anlagenkomponente, ein Teil der Anlagenkomponente, wie z.B. das Zellenrad, umschließen bzw. über diese gestülpt werden. Dabei kann der Reinigungsabschnitt die Anlagenkomponente bzw. ein Teil davon einschließen, beispielsweise derart, dass der Innenraum des Reinigungsabschnitts mit dem Teil der Anlagenkomponente den Reinigungsraum bildet. Der Reinigungsabschnitt kann somit ausgebildet sein, mit der Anlagenkomponente oder einem Teil davon einen geschlossenen Reinigungsraum zu begrenzen. Dadurch kann zumindest ein Teil der Anlagenkomponente, wie z.B. ein Zellenrad, mittels der Reinigungsvorrichtung bzw. dessen Reinigungswerkzeug auf einfache Weise gereinigt werden.

Zum Verbinden und/oder Andocken an die Anlagenkomponente bzw. an ein Teil davon kann der Reinigungsabschnitt einen Verbindungsabschnitt umfassen. Der Verbindungsabschnitt kann beispielsweise als Flanschteil ausgebildet sein. In einer Variante kann der Verbindungsabschnitt an dem Deckelteil des Reinigungsabschnitts angeordnet oder durch dieses gebildet sein. In einer anderen Variante kann der Verbindungsabschnitt an dem Gehäuse des Reinigungsabschnitts angeordnet oder durch dieses gebildet sein, beispielsweise an der oder durch die offene Gehäuseseite. Ferner kann der Verbindungsabschnitt eine Dichteinrichtung aufweisen, die ausgebildet ist den Reinigungsabschnitt mit der Anlagenkomponente bzw. mit einem Teil davon dichtend miteinander zu verbinden.

Die Reinigungsvorrichtung kann zumindest eine Absaugeinrichtung zum Absaugen von Schmutz aufweisen. Beispielsweise kann die Absaugeinrichtung zum trockenen und/oder nassen Absaugen eingerichtet sein. In einer Variante kann die Absaugeinrichtung zumindest eine Saugleitung aufweisen, die beispielsweise an dem Reinigungsabschnitt angeordnet ist und/oder in den Reinigungsraum ragt oder mündet. Ferner kann eine Saugpumpe vorgesehen sein, die insbesondere mit der zumindest einen Saugleitung wirkverbunden ist.

Zum Bevorraten eines Hilfsstoffs oder Schmutzstoffs kann die Reinigungsvorrichtung zumindest einen Vorratsbehälter aufweisen. In einer Variante kann die Reinigungsvorrichtung eine Vorratsbehälter für Schmutzstoff und zumindest einen Vorratsbehälter für einen Hilfsstoff aufweisen. Ein Hilfsstoff kann beispielsweise Energie, z.B. Elektroenergie oder Strom, Luft, z.B. Spülluft, Druckluft, Heißluft oder Kühlluft, Wasser, z.B. Frischwasser, Spülwasser, Heißwasser oder Kühlwasser, ein Strahlmittel, z.B. Sand oder Glas, oder ein Reinigungsmittel, z.B. Lösemittel, Spülmittel oder Schaumkonzentrat, sein. Ein Schmutzstoff kann zum Beispiel Schmutz in trockener, nasser oder flüssiger Form sein, z.B. als Partikel, Pulver, Staub oder Schmutzwasser. Der zumindest eine Vorratsbehälter kann daher ein Tank zum Bevorraten eines Hilfsstoffs oder eine Speichereinrichtung, beispielsweise ein Energiespeicher, wie ein Akku oder eine Batterie, sein. Zusätzlich oder alternativ kann die Reinigungsvorrichtung zumindest eine Übertragungsschnittstelle zum Übertragen eines Hilfsstoffs oder Schmutzstoffs aufweisen. Hierzu kann die Übertragungsschnittstelle zumindest eine Übertragungsleitung aufweisen. Die zumindest eine Übertragungsschnittstelle oder dessen zumindest eine Übertragungsleitung kann mit einer Servicestation verbindbar ausgebildet sein. Die Servicestation kann eine gesondert vorgesehen Servicestation oder eine an der Analgenkomponente angeordnete und/oder zugeordnete Servicestation sein. In diesem Fall kann der Schmutzstoff und/oder der zumindest eine Hilfsstoff von der Reinigungsvorrichtung an ein Servicestation übertragen werden. Dadurch können die Vorratsbehälter entleert, aber auch, sofern vorgesehen, befüllt und/oder aufgeladen werden. Zusätzlich oder alternativ kann die Übertragungsschnittstelle auch mit einer an der Anlagenkomponente oder Förderanlage vorgesehenen Schnittstelle zum Abführen von Schmutzstoff und/oder Zuführen von Hilfsstoffen verbindbar oder verbunden sein.

In einer Variante kann der Trägerabschnitt eine Bewegungseinrichtung aufweisen. Die Bewegungseinrichtung kann zumindest eine Linearführung, beispielsweise zwei oder drei Linearführungen aufweisen. Dabei können die Linearführung im Wesentlichen senkrecht zueinander angeordnet sein, beispielsweise so, dass eine lineare Führung entlang zwei oder drei zueinander senkrecht stehenden Achsen erfolgen kann. Zusätzlich oder alternativ kann die Bewegungseinrichtung einen Schwenkmechanismus, z.B. eine Dreheinrichtung, aufweisen, mit dem ein Verschwenken oder Verdrehen um eine Achse, beispielsweise um eine Vertikalachse, Hochachse oder Querachse, durchführbar ist. In einer Ausführungsform kann ein Arm, wie Gelenk-, Schwenk- und/oder Führungsarm, vorgesehen sein. Der Arm kann auch als Roboterarm ausgebildet sein, beispielsweise ein-, zwei-, drei- oder mehrachsig. Alternativ kann der Trägerabschnitt scharnierartig ausgebildet sein oder zumindest ein Scharnierelement aufweisen. Durch die Bewegungseinrichtung kann die Reinigungsvorrichtung relativ zur Anlagenkomponente bewegt werden. Insbesondere kann der Reinigungsabschnitt mit der Bewegungseinrichtung verbunden sein, sodass eine Bewegung des Reinigungsabschnitts relativ zur Anlagenkomponente durchgeführt werden kann.

In einer bevorzugten Variante kann die Reinigungsvorrichtung die Transporteinrichtung umfassen. Dabei kann die Reinigungsvorrichtung mittels des Trägerabschnitts an der Transporteinrichtung befestigt bzw. montiert sein. Die Transporteinrichtung kann insbesondere zum Transport der Reinigungsvorrichtung ausgebildet sein. In einer Variante kann die Transporteinrichtung als autonom oder teilautonom, selbstfahrendes Fahrzeug oder selbstfliegendes Fluggerät ausgebildet sein. Dabei kann es sich zum Beispiel um ein motorbetriebenes Fahrzeug oder um eine flugfähige Drohne handeln. Das Fahrzeug oder das Fluggerät kann zumindest einen Vorratsbehälter zum Bevorraten eines Hilfsstoffs und/oder Schmutzstoffs umfassen. In einer Variante kann das Fahrzeug oder das Fluggerät zumindest eine Speichereinrichtung, beispielsweise ein Energiespeicher, wie ein Akku oder eine Batterie, umfassen. Ferner kann das Fahrzeug oder das Fluggerät das zumindest eine Reinigungswerkzeug, beispielsweise die Sprüheinrichtung, umfassen. Die Reinigungsvorrichtung kann daher auch als Reinigungsfahrzeug oder eine Reinigungsdrohne ausgeführt sein. Hierzu kann die Transporteinrichtung zumindest einen Antrieb, beispielsweise einen Motor, wie Elektromotor und/oder Rotor, umfassen. Ferner kann die Transporteinrichtung Flügel, drehantreibbare Räder und/oder Rotorblätter umfassen. In einer Variante kann die Transporteinrichtung zum autonomen oder teilautonomen Fahrbetrieb eingerichtet sein. Zusätzlich oder alternativ kann die Transporteinrichtung zum Fern-Steuerungsbetrieb und/oder für den manuellen Betrieb eingerichtet sein. Ein autonom oder teilautonomer Fahrbetrieb, oder alternativ ein Fern-Steuerungsbetrieb, ist insbesondere dann vorteilhaft, wenn gesundheitsgefährdende Stoffe, wie für Pharmaprodukte oder zur Batterieherstellung, verarbeitet bzw. mittels der Förderanlage befördert werden.

Die Transporteinrichtung kann auch eine Steuereinrichtung umfassen, die zum Steuern der Transporteinrichtung eingerichtet ist. Hierzu kann eine Umfeldsensorik vorgesehen sein, die dazu eingerichtet ist, der Steuereinrichtung die ein Umfeld der Reinigungsvorrichtung wiedergebenden Umfelddaten bereitzustellen. Zusätzlich oder alternativ kann eine Navigations-einrichtung vorgesehen sein, die dazu eingerichtet ist, die aktuelle Position der Reinigungsvorrichtung zu bestimmen. Die Steuereinrichtung kann, insbesondere kabellos bzw. per Funk, mit einer zentralen Steuereinrichtung und/oder mit der Steuereinrichtung der Förderanlage verbunden sein. Die Steuereinrichtung kann zum Empfang und/oder Senden von Daten, Informationen oder Signalen eingerichtet sein.

Die Reinigungsvorrichtung kann daher in der Lage sein, sich selbsttätig und/oder eigenständig mittels der Transporteinrichtung, insbesondere in einem Anwendungsraum oder Anwendungsgebiet, zu bewegen. Somit ist es möglich, dass die Reinigungsvorrichtung mehrere und/oder schwer zugängliche Anlagenkomponenten der Förderanlage reinigen kann. Die Reinigungsvorrichtung kann so ausgeführt sein, dass eine eigenständige Orientierung zumindest im Anwendungsraum oder Anwendungsgebiet, beispielsweise durch Verarbeitung einer mittels der Umfeldsensorik erfassten und/oder Navigationseinrichtung bereitgestellten Position durchführbar ist. Hierzu kann die Navigationseinrichtung gespeicherte Kartendaten, beispielsweise zum Ermitteln und/oder Abgleich einer Position, umfassen und/oder darauf mittels einer Schnittstelle zugreifen. Die Navigationseinrichtung kann beispielsweise eine GPS-Navigationseinrichtung sein oder aufweisen. Bei dem Anwendungsraum oder Anwendungsgebiet kann es sich um das durch die Förderanlage bestimmte und/oder begrenzte Gebiet bzw. Raum oder alternativ um nur einen Teilbereich davon handeln.

Gemäß einem weiteren Aspekt ist ein Reinigungssystem zum Reinigen einer Anlagenkomponente einer Förderanlage vorgesehen. Förderanlage dient zum Fördern von Schüttgut. Die Anlagenkomponente und/oder Förderanlage kann wie vorstehend und/oder nachfolgend beschrieben ausgebildet sein. Das Reinigungssystem umfasst insbesondere zumindest eine Reinigungsvorrichtung, die wie vorstehend und/oder nachfolgend beschrieben ausgebildet sein kann. Ferner kann das Reinigungssystem zumindest eine Servicestation aufweisen. Die Reinigungsvorrichtung ist derart eingerichtet, dass sie sich selbsttätig und/oder automatisch, beispielsweise mittels der Transporteinrichtung, zu der Servicestation bewegen kann. Beispielsweise ist die Reinigungsvorrichtung in der Lage zu erkennen, ob eine Fahrt zu einer Servicestation notwendig ist oder nicht. Eine Fahrt zu der Servicestation kann zum Beispiel dann notwendig sein, wenn ein Vorratsbehälter, z.B. ein Hilfsstofftank und/oder Schmutztank, der Reinigungsvorrichtung im Wesentlichen leer bzw. voll ist. Dies kann auch das Ladeerfordernis einer Batterie der Reinigungsvorrichtung umfassen.

An der Servicestation kann die Reinigungsvorrichtung den wenigstens einen Hilfsstoff und/oder Energie zum Laden einer Batterie aus der Servicestation entnehmen. Ferner kann die Reinigungsvorrichtung den wenigstens einen Schmutzstoff an die Servicestation übergeben. Dabei kann die Servicestation zum Übertragen zumindest eines Hilfsstoffs und/oder Schmutzstoffs zu oder von der zumindest einen Reinigungsvorrichtung eingerichtet sein. Dazu kann die Servicestation zumindest einen Servicestutzen zum Verbinden mit der zumindest einen Reinigungsvorrichtung aufweisen. Zur Verbindung mit dem zumindest einen Servicestutzen kann die Reinigungsvorrichtung dann zumindest einen Verbindungsstutzen umfassen. Das Übertragen eines Hilfsstoffs oder die Entnahme von Schmutzstoff kann je nach Erfordernis erfolgen. Zum Bevorraten von zumindest einem Hilfsstoff und/oder von Schmutzstoff kann die Servicestation zumindest einen Tank aufweisen. Ferner kann die Servicestation zumindest eine Ladeeinrichtung aufweisen, die eingerichtet ist, eine Batterie und/oder Akku der zumindest einen Reinigungsvorrichtung zu laden.

Nach der Aufnahme des oder der Hilfsstoffe, beispielsweise über die Stutzen, nach einem Ladevorgang und/oder nach Abgabe von Schmutzstoff kann die Reinigungsvorrichtung wieder zum Ort der Reinigungsaufgabe zurückkehren, zu einer neuen Reinigungsaufgabe fahren oder in einem Bereitschaftsmodus für eine zukünftige Reinigungsaufgabe bereitstehen.

Gemäß einem weiteren Aspekt ist eine Anordnung vorgesehen, die zumindest eine Reinigungsvorrichtung und zumindest eine Anlagenkomponente umfasst. Die zumindest eine Reinigungsvorrichtung kann wie vorstehend und/oder nachfolgend beschrieben ausgebildet sein. In einer Variante kann die Reinigungsvorrichtung mittels des Trägerabschnitts an der Anlagenkomponente befestigt sein. In einer alterativen Variante kann die Reinigungsvorrichtung an dem Drittgegenstand befestigt sein.

Die zumindest eine Anlagenkomponenten kann wie vorstehend und/oder nachfolgend beschrieben ausgebildet sein. Beispielsweise kann die Anlagenkomponente eine Fördereinrichtung, ein Einspeiseorgan, eine Zuführeinrichtung, eine Dosiervorrichtung, eine Schleuse, ein Drehteil, eine Weiche, ein Schieber, eine Klappe oder eine Förderschnecke sein oder umfassen. Die Schleuse kann beispielsweise eine Zellenradschleuse, Durchblasschleuse oder Austragsschleuse sein. Die Zellenradschleuse kann wie vorstehend und/oder nachfolgend beschrieben ausgebildet sein. Der Schieber kann als Absperrschieber ausgebildet sein. In einer Variante kann die Anlagenkomponente zum Einspeisen oder Ausschleusen von Schüttgut in eine bzw. aus einer Förderleitung der Förderanlage ausgebildet sein. In einer anderen Variante kann die Anlagenkomponente eine Mischvorrichtung oder eine Trennvorrichtung sein oder umfassen. Die Trennvorrichtung kann eine Vorrichtung zur Klassierung von Feststoffen nach definierten Kriterien sein, beispielsweise ein Sichter.

In einer bevorzugten Variante ist die zumindest eine Anlagenkomponente zum manuellen oder automatischen Öffnen ausgebildet. Hierzu kann die Anlagenkomponente eine Auszugsvorrichtung zum Verlagern eines Wirkelements der Anlagenkomponente zwischen einer Betriebsposition und einer Auszugsposition aufweisen. Dadurch kann das Wirkelement aus einem Gehäuse der Anlagenkomponente heraus bewegbar ausgebildet sein. Das Wirkelement kann beispielsweise ein Drehteil, ein Zellenrad, ein Schieber, eine Klappe oder eine Förderschnecke sein. Die Auszugsvorrichtung kann eine Führungseinheit zum geführten Verlagern des Wirkelements entlang einer zur Längsachse parallelen Auszugsrichtung aufweisen. Ferner kann die Auszugsvorrichtung einen, beispielsweise motorischen, Auszugsantrieb zum maschinell angetriebenen Verlagern des Wirkelements umfassen. Das Wirkelement kann daher zwischen einer Betriebsposition und einer Auszugsposition mittels der Auszugsvorrichtung angetrieben und geführt verlagert werden. Damit kann ein teil- oder vollautomatisiertes Verlagern des Wirkelements in die Auszugsposition für einen Reinigungsprozess erfolgen.

Gemäß einem weiteren Aspekt ist eine Förderanlage zum Fördern von Schüttgut vorgesehen. Die Förderanlage umfasst zumindest eine Anordnung, die wie vorstehend und/oder nachfolgend beschrieben ausgebildet ist. Zusätzlich oder alternativ kann die Förderanlage ein Reinigungssystem aufweisen. Das Reinigungssystem kann dabei wie vorstehend und/oder nachfolgend beschrieben ausgebildet sein.

Nachfolgend werden Ausführungsbeispiele der Erfindung unter Bezugnahme auf Figuren näher beschrieben, dabei zeigen schematisch und beispielhaft:
- Fig. 1: ein Reinigungssystem zum Reinigen einer Anlagenkomponente einer Förderanlage;
- Fig. 2: eine Variante einer Reinigungsvorrichtung;
- Fig. 3: eine weitere Variante ein Reinigungsvorrichtung; und
- Fig. 4: eine Variante eines Reinigungswerkzeugs.

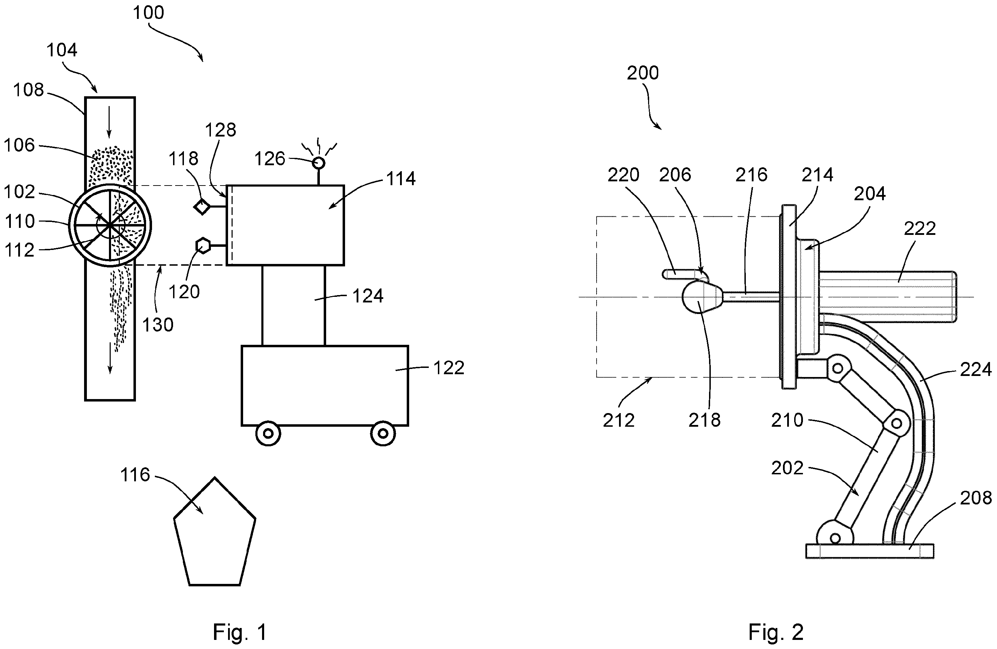

Fig. 1 zeigt schematisch ein Reinigungssystem 100 zum Reinigen einer Anlagenkomponente 102 einer Förderanlage 104. Die Förderanlage 104 ist zum Fördern von Schüttgut 106 ausgebildet und umfasst zumindest eine Förderleitung 108, in die die Anlagenkomponente 102 integriert ist. Im vorliegendem Ausführungsbeispiel ist die Anlagenkomponente 102 als Zellenradschleuse 102 ausgebildet. Die Zellenradschleuse 102 weist ein einen Innenraum aufweisendes Gehäuse 110 und ein im Gehäuse 110 drehbar gelagertes Zellenrad 112 auf. Ferner umfasst die Zellenradschleuse 102 einen am Gehäuse 110 lösbar befestigten Auszugs-Seitendeckel (in Fig. 1 nicht dargestellt). Das Zellenrad 112 ist in einer Betriebsposition in dem Gehäuse 110 um eine Längsachse drehantreibbar angeordnet und am Auszugs-Seitendeckel gehalten. Zudem weist die Zellenradschleuse 102 eine Auszugsvorrichtung (in Fig. 1 nicht dargestellt) zum Verlagern des Zellenrads 112 zwischen der Betriebsposition und einer Auszugsposition auf. Die Auszugsvorrichtung kann eine Führungseinheit zum geführten Verlagern des Zellenrads 112 entlang einer zur Längsachse parallelen Auszugsrichtung aufweisen. Ferner kann die Auszugsvorrichtung einen gehäusefest angeordneten und mit dem Auszugs-Seitendeckel gekoppelten, insbesondere motorischen, Auszugsantrieb zum maschinell angetriebenen Verlagern des Auszugs-Seitendeckels mit dem Zellenrad 112 umfassen. Das Zellenrad 112 kann somit zwischen der Betriebsposition und der Auszugsposition mittels der Auszugsvorrichtung geführt verlagert werden. Da die Zellenradschleuse 102 zum automatischen Öffnen ausgebildet ist, kann, insbesondere für einen Reinigungsprozess, ein teil- oder vollautomatisiertes Verlagern des Zellenrades 112 in die Auszugsposition bzw. Reinigungsposition erfolgen.

Das Reinigungssystem 100 umfasst nun zumindest eine Reinigungsvorrichtung 114 zum Reinigen der Zellenradschleuse 102 sowie zumindest eine Servicestation 116 zum Übertragen zumindest eines Hilfsstoffs und/oder Schmutzstoffs zu oder von der zumindest einen Reinigungsvorrichtung 114. Bei einem Hilfsstoff kann es sich beispielsweise um Energie, Strom, Luft, Wasser, Strahlmittel, Reinigungsmittel oder dergleichen handeln. Im vorliegenden Ausführungsbeispiel ist die Reinigungsvorrichtung 114 zum Aufnehmen zumindest eines Hilfsstoffs aus einem Tank oder Speicher der Servicestation 116 ausgebildet. Hierzu kann sich die Reinigungsvorrichtung 114 mit der Servicestation 116, z.B. mittels einer Übertragungsschnittstelle, wie eine Leitung oder einen Stutzen, derart verbinden, dass zumindest ein Vorratsbehälter oder Speicher der Reinigungsvorrichtung 114 mit dem jeweiligen Hilfsstoff befüllt oder geladen werden kann. Die Vorratsbehälter dienen zum Bevorraten der Hilfsstoffe. In ähnlicher Weise kann in einem Tank der Reinigungsvorrichtung 114 bevorrateter Schmutzstoff, der durch einen Reinigungsvorgang entstanden ist und von der Reinigungsvorrichtung 114 aufgenommen wurde, an die Servicestation 116 abgegeben werden, um den Schmutzstoffstank der Reinigungsvorrichtung 114 zu entleeren.

Die Reinigungsvorrichtung 114 ist in Fig. 1 schematisch dargestellt und umfasst zumindest ein Reinigungswerkzeug 118 zum Reinigen zumindest eines Teils der Zellenradschleuse 102. Bevorzugt ist die Reinigungsvorrichtung 114 ausgebildet, einen Reinigungsvorgang zum Reinigen des zumindest einen Teils der Zellenradschleuse 102 selbsttätig und/oder automatisch zu veranlassen und/oder durchzuführen. Das Reinigungswerkzeug 118 kann zur trockenen, feuchten und/oder nassen Reinigung eingerichtet sein. Beispielsweise kann das Reinigungswerkzeug eine Sprüheinrichtung, Blaseinrichtung, Bürsteneinrichtung, Klingeneinrichtung und/oder Wischeinrichtung sein. Zum Aufnehmen des durch die Reinigung mittels des Reinigungswerkzeugs 118 anfallenden Schmutzstoffs weist die Reinigungsvorrichtung 114 zumindest eine Absaugeinrichtung 120 zum Absaugen des Schmutzstoffs nach oder während des Reinigungsvorgangs auf.

In der in Fig. 1 dargestellten Ausführungsform weist die Reinigungsvorrichtung 114 eine Transporteinrichtung 122 und einen Trägerabschnitt 124 auf. Mittels des Trägerabschnitts 124 ist die Reinigungsvorrichtung 114 an der Transporteinrichtung 122 befestigt. Zusätzlich oder alternativ kann der Trägerabschnitt 124 ausgebildet sein, die Reinigungsvorrichtung 114 an der Zellenradschleuse 102 und/oder an einem Drittgegenstand, beispielsweise der Förderanlage 104, dessen Förderleitung 108 oder an einer Wand, Decke oder Boden des Gebäudes, in dem die Förderanlage installiert ist, zu befestigen. Bevorzugt umfasst der Trägerabschnitt 124 eine Bewegungseinrichtung, die ausgebildet ist, die Reinigungsvorrichtung 114 relativ zur Zellenradschleuse 102 zu bewegen. Damit kann eine optimale Positionierung des Reinigungswerkzeugs 118 relativ zur Zellenradschleuse erfolgen.

Die Transporteinrichtung 122 ist zum Transport der Reinigungsvorrichtung 114 ausgebildet. Im vorliegendem Ausführungsbeispiel gemäß Fig. 1 ist die Transporteinrichtung 122 als autonom oder teilautonom, selbstfahrendes Fahrzeug eingerichtet. Hierzu weist die Transporteinrichtung 122 einen Antrieb, beispielsweise einen Elektromotor, und zumindest drei Räder auf. Die Transporteinrichtung 122 ermöglicht somit einen autonomen oder teilautonomen Fahrbetrieb der Reinigungsvorrichtung 114. Zusätzlich oder alternativ kann ein Fern-Steuerungsbetrieb und/oder ein manueller Betriebsmodus vorgesehen sein. Zur Navigation im autonomen oder teilautonomen Fahrbetrieb umfasst die Transporteinrichtung 122 eine Umfeldsensorik. Die Umfeldsensorik kann beispielsweise mehrere Radarsensoren, Lidarsensoren oder dergleichen aufweisen. Insbesondere ist die Umfeldsensorik dazu eingerichtet, einer Steuereinrichtung die ein Umfeld der Reinigungsvorrichtung 114 wiedergebenden Umfelddaten bereitzustellen. Ferner kann eine Navigationseinrichtung vorgesehen sein, die dazu eingerichtet ist, die aktuelle Position der Reinigungsvorrichtung 114 im Anwendungsraum oder Anwendungsgebiet zu bestimmen, um eine Navigation beispielsweise von der Servicestation 116 zu der zu reinigenden Zellenradschleuse 102 zu ermöglichen.

Die Reinigungsvorrichtung 114 weist ferner eine Kommunikationsschnittstelle 126 auf, die zum Kommunizieren mit der Zellenradschleuse 102 und/oder mit einer in Fig. 1 nicht dargestellten Steuereinrichtung der Förderanlage 104 eingerichtet ist. Die Kommunikationsschnittstelle 126 umfasst insbesondere eine Sendeeinheit, eine Empfangseinheit und eine Antenne. Die Steuerung der Reinigungsvorrichtung 114 ist mit der Kommunikationsschnittstelle 126 elektrisch verbunden, so dass Daten und Signale mittels der Kommunikationsschnittstelle 126 empfangen und/oder gesendet werden können. In einer Variante kann die Reinigungsvorrichtung 114 ausgebildet sein, den Reinigungsvorgang zu veranlassen, nachdem ein Reinigungssignal mittels der Kommunikationsschnittstelle 126 empfangen wurde.

Zusätzlich oder alternativ ist es möglich, dass die Reinigungsvorrichtung 114 eine Erkennungssensorik aufweist, die dazu eingerichtet ist, einen Zustand der Zellenradschleuse 102 zu erkennen, insbesondere ob die Zellenradschleuse 102 in einem geöffneten oder geschlossenen Zustand ist und/oder in einem ausgefahrenen oder eingefahrenen Zustand ist, sich also in der Betriebsposition oder der Auszugsposition befindet. Hierzu kann die Erkennungssensorik zum Beispiel ein optisches Erfassungsmittel, wie eine Kamera, aufweisen. Ein Reinigungsvorgang erfolgt dann erst, wenn erkannt wurde, dass sich die Zellenradschleuse 102 in der Auszugsposition befindet und das Zellenrad 112 somit freiliegt.

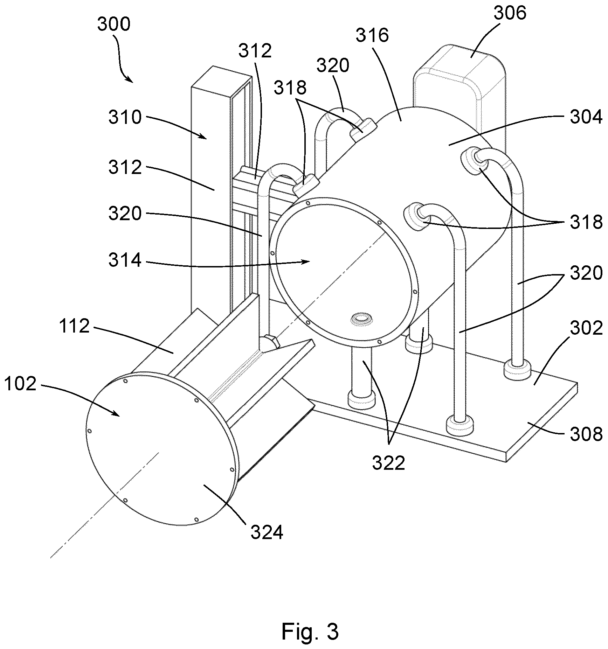

Für eine optimale Reinigung der Zellenradschleuse 102 oder zumindest eines Teils davon umfasst die Reinigungsvorrichtung1 14 einen Reinigungsabschnitt 128. An dem Reinigungsabschnitt 128 ist das Reinigungswerkzeug 118 angeordnet. Ferner kann die Absaugeinrichtung, wie im gezeigten Ausführungsbeispiel, an dem Reinigungsabschnitt 128 angeordnet sein. In einer nachfolgend mit Bezug zu Fig. 2 beschriebenen Variante kann der Reinigungsabschnitt 128 mit der Zellenradschleuse 102 oder einem Teil davon einen Reinigungsraum 130 begrenzen. In einer nachfolgend mit Bezug zu Fig. 3 beschriebenen, alternativen Ausführungsform kann der Reinigungsabschnitt 128 ausgebildet sein, die Zellenradschleuse 102 oder ein Teil davon, wie z.B. das Zellenrad 112, in einen Reinigungsraum 130 einzuschließen. In Fig. 1 ist der Reinigungsraum 130 rein schematisch mit gestrichelten Linien dargestellt.

Fig. 2 zeigt eine Variante einer Reinigungsvorrichtung 200. Die Reinigungsvorrichtung 200 umfasst einen Trägerabschnitt 202, einen daran befestigten Reinigungsabschnitt 204 und ein an dem Reinigungsabschnitt 204 angeordnetes Reinigungswerkzeug 206.

Der Trägerabschnitt 202 weist gemäß der in Fig. 2 dargestellten Ausführungsform ein Befestigungsteil 208 zum Befestigen an einer Transporteinrichtung 122, der Anlagenkomponente 102 oder an einem Drittgegenstand auf. Beispielsweise kann das Befestigungsteil 208 als Flanschteil ausgebildet sein. Des Weiteren weist der Trägerabschnitt 202 eine an dem Befestigungsteil 208 montierte Bewegungseinrichtung 210 auf, die in der vorliegenden Variante als Gelenkarm 210, hier 3-achsiger Gelenkarm, ausgebildet ist und dazu dient den am Gelenkarm 210 befestigten Reinigungsabschnitt 204 relativ zur Anlagenkomponente 102 zu bewegen. Bei der Anlagenkomponente 102 kann es sich insbesondere um eine Zellenradschleuse 102 handeln.

Wie in Fig. 2 gezeigt, ist der Reinigungsabschnitt 204 ausgebildet, mit der Anlagenkomponente 102 oder einem Teil davon einen Reinigungsraum 212 zu begrenzen. Dabei ist der Reinigungsabschnitt 204 mit der Anlagenkomponente 102 oder einem Teil davon korrespondierend bzw. komplementär ausgebildet. Im Falle einer Zellenradschleuse 102 ist der Reinigungsabschnitt 204, wie in Fig. 2 dargestellt, als Deckelteil 214, wie Seitendeckel, ausgebildet. Der Reinigungsabschnitt 204 ist somit im Wesentlichen wie ein Seitendeckel 214 der Zellenradschleuse ausgebildet, der auf das Gehäuse der Zellenradschleuse 102 gepresst bzw. gedrückt werden kann, um dieses bei ausgefahrenem Zellenrad 112 zu verschließen und den Innenraum des Gehäuses mittels des Reinigungswerkzeugs 206 zu reinigen.

Das Reinigungswerkzeug 206 ist auf einer Seite des Deckelteils 214 angeordnet und im vorliegenden Ausführungsbeispiel als Sprüheinrichtung 206 ausgebildet. Die Sprüheinrichtung 206 ist an einer verfahrbaren und/oder drehbahren Lanze 216 montiert, durch die die Sprüheinrichtung 206 beispielsweise in zumindest einer axialen Richtung verfahrbar und/oder um eine Achse drehbar ist. Zum Reinigen weist die Sprüheinrichtung 206 einen Sprühkopf 218 und eine Sprühdüse 20 auf, aus der Reinigungsmittel, Wasser, Luft, etc. gesprüht werden kann. An der gegenüberliegenden Seite des Deckelteils 214 ist ein Antrieb 222 vorgesehen, der mit der Lanze 216 wirkverbunden ist, um so eine Linear- und/oder Drehbewegung der Lanze 216 zu ermöglichen. Der Sprüheinrichtung 206 kann so weiter in den Innenraum des Gehäuses der Zellenradschleuse 102 verlagert werden. Ferner ist an der Sprüheinrichtung 206 abgewandten Seite des Deckelteils 214 eine Zuführleitung 224 angeordnet, die zum Zuführen des aus der Sprüheinrichtung 206 zu sprühenden Mittels dient. Hierfür ist die Zuführleitung 224 mit der Sprüheinrichtung 206 verbunden.

Die Sprüheinrichtung 206 ist somit mittels des Gelenkarms 210, bei geöffneter Zellenradschleuse 102, in den Innenraum des Gehäuses der Zellenradschleuse 102 einführbar. Vorteilhaft ist, dass das Gehäuse der Zellenradschleuse 102 durch das Deckelteil 214 verschlossen wird, insbesondere derart, dass der Innenraum des Gehäuses den Reinigungsraum 212 bildet. Dadurch kann der Innenraum des Gehäuses der Zellenradschleuse 102 mittels der Reinigungsvorrichtung 200 bzw. dessen Sprüheinrichtung 206 auf einfache Weise gereinigt werden.

Im Übrigen wird ergänzend insbesondere auf Fig. 1 und die zugehörige Beschreibung verwiesen.

Fig. 3 zeigt eine weitere Variante einer Reinigungsvorrichtung 300. Die Reinigungsvorrichtung 300 umfasst einen Trägerabschnitt 302, einen daran befestigten Reinigungsabschnitt 304, ein an dem Reinigungsabschnitt 204 angeordnetes Reinigungswerkzeug (in Fig. 3 nicht dargestellt) und ein Antriebsmodul 306.

Der Trägerabschnitt 302 weist gemäß der in Fig. 3 dargestellten Ausführungsform ein als Befestigungsplatte ausgebildetes Befestigungsteil 308 zum Befestigen an einer Transporteinrichtung 122, der Anlagenkomponente 102 oder an einem Drittgegenstand auf. Des Weiteren weist der Trägerabschnitt 302 eine an dem Befestigungsteil 308 montierte Bewegungseinrichtung 310 auf, die in der vorliegenden Variante als Linearführungseinrichtung 310 ausgebildet ist und dazu dient den an der Linearführungseinrichtung 310 befestigten Reinigungsabschnitt 304 relativ zur Anlagenkomponente 102 zu bewegen. Bei der Anlagenkomponente 102 kann es sich, wie in Fig. 3 dargestellt, um ein Zellenrad 112 einer Zellenradschleuse 102 handeln. Die Linearführungseinrichtung 310 umfasst zwei senkrecht zueinander angeordnete Linearführungen 312, jeweils mit Führungsstangen und Antrieb. Dadurch lässt sich der Reinigungsabschnitt 304 sowohl vertikal als auch horizontal verstellen und relativ zum Zellenrad 112 bewegen.

Im vorliegenden Ausführungsbeispiel gemäß Fig. 3 ist der Reinigungsabschnitt 304 ausgebildet, das Zellenrad 112 der Zellenradschleuse 102 in einen Reinigungsraum 314 einzuschließen. Vorzugsweise ist der Reinigungsabschnitt 304 derart als Gehäuse 316, hier als Zylindergehäuse bzw. Trommel ausgebildet, dass ein Innenraum des Gehäuses 316 den Reinigungsraum 314 definiert bzw. bildet. Wie in Fig. 3 gezeigt, ist das Gehäuse 316 auf einer Seite offen ausgebildet, durch die das Zellenrad 112 in den Reinigungsraum gelangen kann. Der Reinigungsabschnitt 304 ist somit eine Art Reinigungs- bzw. Waschtrommel und bildet für Reinigungszwecke eine Einhausung für das Zellenrad 112. An der gegenüberliegenden Seite der Gehäuseöffnung ragt das Reinigungswerkzeug in den Reinigungsraum 314 hinein und kann, beispielsweise mittels eines ersten Antriebs des Antriebsmoduls 306, zum Durchführen einer Reinigung angetrieben werden. In der vorliegenden Variante sind an dem Gehäuse 316 ferner mehrere in den Reinigungsraum 314 mündende Sprühdüsen 318 angeordnet. Mittels der Sprühdüsen 318 kann ein Hilfsstoff, z.B. Reinigungsmittel, Wasser oder Luft, aber auch ein Spülmittel in den Reinigungsraum 314 und damit auf das Zellenrad 112 gesprüht werden. Zum Zuführen des Hilfsstoffs oder Spülmittels sind Zuführleitungen 320 vorgesehen, die mit den Sprühdüsen 318 verbunden sind. Zusätzlich sind Abführleitungen 322 zum Abführen eines Schmutzstoffs vorgesehen, die vorzugsweise in Bodennähe des Gehäuse 316 angeordnet sind und mit ihren einen Ende in den Reinigungsraum 314 müden.

Bei geöffneter Zellenradschleuse 102 kann nun das Gehäuse 316 des Reinigungsabschnitts 304 mittels der Linearführungseinrichtung 310 und ggf. mittels der Transporteinrichtung 122 derart bewegt werden, dass das Zellenrad 112 in den Reinigungsraum 314 geführt und umschlossen wird. Dabei gelangt in einer Endlage der Seitendeckel 324, an dem das Zellenrad 122 gelagert ist, in Anschlag mit dem Gehäuse 316 des Reinigungsabschnitts 304. Vorzugsweise wird die Gehäuseöffnung dadurch dicht verschlossen. Hierzu kann an dem Gehäuse 316 ein Flanschteil und/oder ein Dichtelement vorgesehen sein. Das Zellenrad 112 ist nun in dem Reinigungsraum 314 eingeschlossen und der Reinigungsvorgang zum Reinigen des Zellenrads 112 mittels des Reinigungswerkzeugs und der Sprühdüsen 318 kann beginnen. In einer Variante kann das Zellenrad 112 mit einem zweiten Antrieb des Antriebsmoduls 306 koppelbar ausgeführt sein. Damit kann das Zellenrad 112 durch den zweiten Antrieb des Antriebsmoduls 306 angetrieben und innerhalb des Reinigungsraums 314 in Drehung versetzt werden. Die Reinigungsleistung wird dadurch nochmals verbessert.

Im Übrigen wird ergänzend insbesondere auf Fign. 1 und 2 und die zugehörige Beschreibung verwiesen.

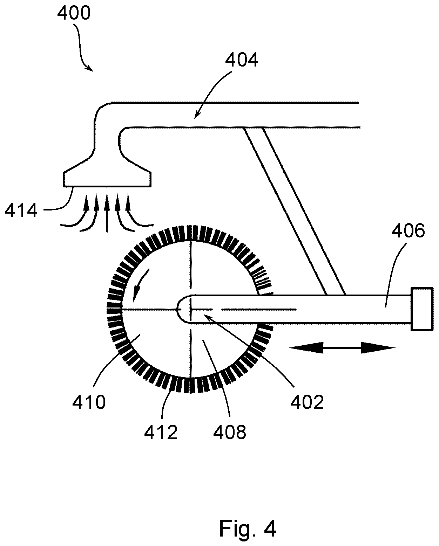

Fig. 4 zeigt eine weitere Variante eines Reinigungswerkzeugs 400. Das Reinigungswerkzeugs 400 kann beispielsweise an den vorstehend beschriebenen Reinigungsabschnitten anordenbar sein.

Das Reinigungswerkzeug 400 umfasst eine Bürsteneinrichtung 402 und eine Absaugeinrichtung 404. Die Bürsteneinrichtung 402 ist zum Reinigen der Anlagenkomponente bzw. eines Teils davon ausgebildet. Hierzu weist die Bürsteneinrichtung 402 ein Trägerelement 406 und ein daran rotierbar und/oder drehbar gelagertes Bürstenelement 408 auf. Das Bürstenelement 408 ist als rotierbare Bürste ausgebildet und umfasst eine drehbare Scheibe 410, an deren Umfang die Borsten 412 der Bürste angeordnet sind. Das Bürstenelement 408 bzw. dessen Scheibe 410 kann mittels eines Antriebs (in Fig. 4 nicht dargestellt) in Drehung versetzt werden. An dem Trägerelement 406 ist ferner die Absaugeinrichtung 404 angeordnet und zwar derart, dass eine Saugöffnung 414 der Absaugeinrichtung 404 dem Bürstenelement 408 zugewandt ist. Die Absaugeinrichtung 404 ist zum Absaugen des Schmutzstoffs ausgebildet.

Ferner ist das Reinigungswerkzeug 400 verfahrbar (in Fig. 4 beispielsweise in Links-Rechts-Richtung). Hierzu kann ein Antrieb und/oder Aktuator vorgesehen sein. Das Reinigungswerkzeug 400 kann so beispielsweise in den Innenraum des Gehäuses der Zellenradschleuse 102 eingefahren oder an das Zellenrad 112 der Zellenradschleuse 102 herangefahren werden. Dadurch kann der Innenraum des Gehäuses der Zellenradschleuse 102 oder das Zellenrad 112 mittels des rotierenden Bürstenelements 408 auf einfache Weise gereinigt und der anfallende Schmutzstoff mittels der Absaugeinrichtung 404 während des Reinigungsvorgangs abgesaugt werden.

Im Übrigen wird ergänzend insbesondere auf Fign. 1 bis 3 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Reinigungssystem
- 102: Anlagenkomponente / Zellenradschleuse
- 104: Förderanlage
- 106: Schüttgut
- 108: Förderleitung
- 110: Gehäuse der Zellenradschleuse
- 112: Zellenrad
- 114: Reinigungsvorrichtung
- 116: Servicestation
- 118: Reinigungswerkzeug
- 120: Absaugeinrichtung
- 122: Transporteinrichtung
- 124: Trägerabschnitt
- 126: Kommunikationsschnittstelle
- 128: Reinigungsabschnitt
- 130: Reinigungsraum

- 200: Reinigungsvorrichtung
- 202: Trägerabschnitt
- 204: Reinigungsabschnitt
- 206: Reinigungswerkzeug / Sprüheinrichtung
- 208: Befestigungsteil
- 210: Bewegungseinrichtung / Gelenkarm
- 212: Reinigungsraum
- 214: Deckelteil
- 216: Lanze
- 218: Sprühkopf
- 220: Sprühdüse
- 222: Antrieb
- 224: Zuführleitung
- 300: Reinigungsvorrichtung
- 302: Trägerabschnitt
- 304: Reinigungsabschnitt
- 306: Antriebsmodul
- 308: Befestigungsteil
- 310: Bewegungseinrichtung / Linearführungseinrichtung
- 312: Linearführungen
- 314: Reinigungsraum
- 316: Gehäuse des Reinigungsabschnitts
- 318: Sprühdüsen
- 320: Zuführleitungen
- 322: Abführleitung
- 324: Seitendeckel der Zellenradschleuse

- 400: Reinigungswerkzeug
- 402: Bürsteneinrichtung
- 404: Absaugeinrichtung
- 406: Trägerelement
- 408: Bürstenelement
- 410: Scheibe
- 412: Borsten
- 414: Saugöffnung

## Patentansprüche

1. Reinigungsvorrichtung (114, 200, 300) zum Reinigen einer Anlagenkomponente (102) einer Förderanlage (104) zum Fördern von Schüttgut, umfassend:
- zumindest ein Reinigungswerkzeug (118, 206) zum Reinigen zumindest eines Teils der Anlagenkomponente (102); und
- einen Trägerabschnitt (124, 202, 302) zum Befestigen der Reinigungsvorrichtung (114, 200, 300) an der Anlagenkomponente (102), an einer Transporteinrichtung (122) und/oder an einem Drittgegenstand (104),
wobei die Reinigungsvorrichtung (114, 200, 300) ausgebildet ist, einen Reinigungsvorgang zum Reinigen zumindest eines Teils der Anlagenkomponente (102) selbsttätig zu veranlassen.

2. Reinigungsvorrichtung (114, 200, 300) nach Anspruch 1, **dadurch gekennzeichnet, dass** die Reinigungsvorrichtung (114, 200, 300) eine Kommunikationsschnittstelle (126) zum Kommunizieren mit der Anlagenkomponente (102) und/oder mit einer Steuereinrichtung der Förderanlage (104) aufweist, wobei die Reinigungsvorrichtung (114, 200, 300) ausgebildet ist, den Reinigungsvorgang zu veranlassen, nachdem ein Reinigungssignal mittels der Kommunikationsschnittstelle (126) empfangen wurde.

3. Reinigungsvorrichtung (114, 200, 300) nach wenigstens einem der vorhergehenden Ansprüche, **dadurch gekennzeichnet, dass** die Anlagenkomponente (102) eine Fördereinrichtung, ein Einspeiseorgan, eine Zuführeinrichtung, eine Dosiervorrichtung, eine Mischvorrichtung, eine Trennvorrichtung, eine Schleuse, eine Weiche, ein Schieber, eine Klappe oder eine Förderschnecke ist oder umfasst.

4. Reinigungsvorrichtung (114, 200, 300) nach wenigstens einem der vorhergehenden Ansprüche, **dadurch gekennzeichnet, dass** die Reinigungsvorrichtung (114, 200, 300) eine Erkennungssensorik aufweist, die dazu eingerichtet ist, einen Zustand der Anlagenkomponente (102) zu erkennen, insbesondere ob die Anlagenkomponente (102) in einem geöffneten und/oder ausgefahrenen oder in einem geschlossenen und/oder eingefahrenen Zustand ist.

5. Reinigungsvorrichtung (114, 200, 300) nach wenigstens einem der vorhergehenden Ansprüche, **dadurch gekennzeichnet, dass** die Reinigungsvorrichtung (114, 200, 300) einen Reinigungsabschnitt (128, 204, 304) umfasst, der ausgebildet ist, mit der Anlagenkomponente (102) oder einem Teil (112) davon einen Reinigungsraum (130, 212, 314) zu begrenzen oder ausgebildet ist, die Anlagenkomponente (102) oder ein Teil (112) davon in einen Reinigungsraum (130, 212, 314) einzuschließen.

6. Reinigungsvorrichtung (114, 200, 300) nach wenigstens einem der vorhergehenden Ansprüche, **dadurch gekennzeichnet, dass** der Trägerabschnitt (124, 202, 302) eine Bewegungseinrichtung (210, 310) aufweist, die ausgebildet ist, die Reinigungsvorrichtung (114, 200, 300) relativ zur Anlagenkomponente (102) zu bewegen.

7. Reinigungsvorrichtung (114, 200, 300) nach wenigstens einem der vorhergehenden Ansprüche, **dadurch gekennzeichnet, dass** die Reinigungsvorrichtung (114, 200, 300) die Transporteinrichtung (122) umfasst, wobei die Reinigungsvorrichtung (114, 200, 300) mittels des Trägerabschnitts (124, 202, 302) an der Transporteinrichtung (122) befestigt ist.

8. Reinigungsvorrichtung (114, 200, 300) nach wenigstens einem der vorhergehenden Ansprüche, **dadurch gekennzeichnet, dass** die Transporteinrichtung (122) zum Transport der Reinigungsvorrichtung (114, 200, 300) ausgebildet ist, insbesondere als autonom oder teilautonom, selbstfahrendes Fahrzeug oder selbstfliegendes Fluggerät.

9. Reinigungsvorrichtung (114, 200, 300) nach wenigstens einem der vorhergehenden Ansprüche, **dadurch gekennzeichnet, dass** die Transporteinrichtung (122) zum autonomen oder teilautonomen Fahrbetrieb, zum Fern-Steuerungsbetrieb und/oder für den manuellen Betrieb eingerichtet ist.

10. Reinigungsvorrichtung (114, 200, 300) nach wenigstens einem der vorhergehenden Ansprüche, **dadurch gekennzeichnet, dass** eine Umfeldsensorik vorgesehen ist, die dazu eingerichtet ist, einer Steuereinrichtung die ein Umfeld der Reinigungsvorrichtung (114, 200, 300) wiedergebenden Umfelddaten bereitzustellen, und/oder dass eine Navigationseinrichtung vorgesehen ist, die dazu eingerichtet ist, die aktuelle Position der Reinigungsvorrichtung (114, 200, 300) zu bestimmen.

11. Reinigungsvorrichtung (114, 200, 300) nach wenigstens einem der vorhergehenden Ansprüche, **dadurch gekennzeichnet, dass** die Reinigungsvorrichtung (114, 200, 300) zumindest eine Absaugeinrichtung (120, 322) zum Absaugen von Schmutz aufweist.

12. Reinigungsvorrichtung (114, 200, 300) nach wenigstens einem der vorhergehenden Ansprüche, **dadurch gekennzeichnet, dass** die Reinigungsvorrichtung (114, 200, 300) zumindest einen Vorratsbehälter zum Bevorraten eines Hilfsstoffs oder Schmutzstoffs aufweist, und/oder dass die Reinigungsvorrichtung (114, 200, 300) zumindest eine Übertragungsschnittstelle zum Übertragen eines Hilfsstoffs oder Schmutzstoffs aufweist.

13. Reinigungssystem (100) zum Reinigen einer Anlagenkomponente (102) einer Förderanlage (104) zum Fördern von Schüttgut, umfassend:
- zumindest eine Reinigungsvorrichtung (114, 200, 300) nach wenigstens einem der vorhergehenden Ansprüche; und
- zumindest eine Servicestation (116) zum Übertragen zumindest eines Hilfsstoffs und/oder Schmutzstoffs zu oder von der zumindest einen Reinigungsvorrichtung (114, 200, 300).

14. Anordnung, umfassend zumindest eine Reinigungsvorrichtung (114, 200, 300) nach wenigstens einem der vorhergehenden Ansprüche 1 bis 12 und zumindest eine Anlagenkomponente (102).

15. Anordnung nach Anspruch 14, **dadurch gekennzeichnet, dass** die Reinigungsvorrichtung (114, 200, 300) mittels des Trägerabschnitts (124, 202, 302) an der Anlagenkomponente (102) oder an dem Drittgegenstand (104) befestigt ist.

16. Anordnung nach wenigstens einem der vorhergehenden Ansprüche 14 bis 15, **dadurch gekennzeichnet, dass** die zumindest eine Anlagenkomponente (102) zum manuellen oder automatischen Öffnen ausgebildet ist.

17. Förderanlage (104) zum Fördern von Schüttgut, umfassend zumindest eine Anordnung nach wenigstens einem der vorhergehenden Ansprüche 14 bis 16 oder ein Reinigungssystem (100) nach Anspruch 13.
